# EUROPÄISCHE PATENTSCHRIFT

(11) **EP 0 818 617 B1**
(45) Veröffentlichungstag und Bekanntmachung des Hinweises auf die Patenterteilung: **09.10.2002**
(21) Anmeldenummer: 97111290.9
(22) Anmeldetag: 04.07.1997
(51) Int. Cl.: F02B 43/00, B01D 53/04, B01D 53/94

(54) **Motoranordnung**
Engine arrangement
Agencement moteur

(30) Priorität: 11.07.1996 AT 124596
(43) Veröffentlichungstag der Anmeldung: 14.01.1998
(73) Patentinhaber: Jenbacher Aktiengesellschaft, 6200 Jenbach/Tirol (AT)
(72) Erfinder: Gruber, Friedrich, 6283 Hippach (AT); Melmer, Erwin, 6123 Terfens (AT)
(74) Vertreter: Torggler, Paul Norbert, Dr.

(56) Entgegenhaltungen:
- EP-A- 0 638 349
- EP-A- 0 747 110
- WO-A-84/02283
- US-A- 3 466 138
- US-A- 4 381 755

## Beschreibung

Die Erfindung betrifft eine Motoranordnung mit einem Gasmotor, in dessen Abgastrakt vorzugsweise ein Abgaskatalysator angeordnet ist, wobei in der Treibgaszuleitung zum Gasmotor mindestens eine Reinigungseinrichtung zum adsorptiven Reinigen des Treibgases angeordnet ist, die eine Regeneriereinrichtung zum Regenerieren des Adsorptionsmittels umfaßt.

Beim Einsatz von Verbrennungsmotoren (Gasmotoren) zur energetischen Nutzung von Biogasen (insbesondere Klärgasen oder Deponiegasen) ist die Anwendung eines Abgaskatalysators bisher nicht wirtschaftlich sinnvoll gewesen, weil im Treibgas enthaltene Spurenstoffe die Aktivität des Abgaskatalysators in kurzer Zeit stark beeinträchtigen.

Es ist bereits bekannt, daß mittels einer adsorptiven Reinigungseinrichtung das Treibgas von Katalysatorgiften befreit werden kann (US 4,523,548 A ; vergleiche mit Anspruch 1, erster Teil).

Die Aufnahmefähigkeit des Adsorptionsmittels (insbesondere Aktivkohle) ist begrenzt. Es war deshalb bisher häufig nötig bei bzw. kurz bevor dem Erreichen der Sättigung das Adsorptionsmittel auszutauschen. Da das Ersetzen des Adsorptionsmittels durch ein neues Adsorptionsmittel sowie die Entsorgung des beladenen Adsorptionsmittels einen beträchtlichen Kostenfaktor darstellt, ist bereits vorgeschlagen worden, das Adsorptionsmittel zu regenerieren, insbesondere durch Aufheizen (US 4,523,548 A). Bei diesem Regenerieren kann das Adsorptionsmittel in der Reinigungseinrichtung verbleiben. Es wird lediglich von den aus dem Treibgas adsorbierten Spurenstoffen (Biogasbegleitstoffen) befreit. Allerdings werden bei der US 4,523,548 die aus dem Adsorptionsmittel ausgetriebenen Spurenstoffe wieder dem Motor zugeführt, was aber nach der Aufgabe der Erfindung gerade vermieden werden soll. Es ist daher erfindungsgemäß vorgesehen, daß die Regeneriereinrichtung eine Einrichtung zum Führen eines brennbaren Spülgases durch die Reinigungseinrichtung sowie eine vom Gasmotor gesonderte Einrichtung zum anschließenden Verbrennen des Spülgases samt den von diesem aus dem Adsorptionsmittel mitgenommenen Begleitstoffen umfaßt.

Das Regenerieren erfolgt also vorzugsweise durch Aufheizen des Adsorptionsmittels und durch Spülung desselben mit einem sauberen, brennbaren Spülgas, das anschließend zusammen mit den mitgenommenen Spurenstoffen verbrannt wird. Der Motor erhält nur gereinigtes Gas.

Es hat sich herausgestellt, daß für den Katalysator mit hoher Wahrscheinlichkeit vor allem organische Siliziumverbindungen (sogenannte Siloxane, insbesondere Hexamethyldisiloxan (C6H18OSi) und Octamethyl-cyclotetrasiloxan (C8H24O4Si4)) im Treibgas schädlich sind. Wie Versuche der Anmelderin gezeigt haben, lassen sich die obengenannten Katalysatorgifte mittels eines Aktivkohlefilters als Adsorptionsmittel aus dem Treibgas entfernen. im allgemeinen wird man je nach zu entfernenden Spurenstoffen im Treibgas geeignete Adsorptionsmittel auswählen.

Weitere Vorteile und Einzelheiten der Erfindung werden anhand der nachfolgenden Figurenbeschreibung näher erläutert:
- Fig. 1: zeigt in schematischer Darstellung ein Ausführungsbeispiel einer erfindungsgemäßen Motoranordnung,
- Fig. 2: zeigt den Aufbau eines Ausführungsbeispiels einer erfindungsgemäßen Reinigungseinrichtung und
- Fig. 3: zeigt ein Ausführungsbeispiel einer erfindungsgemäßen Motoranordnung mit zwei parallelen Reinigungseinrichtungen samt Regeneriereinrichtung.

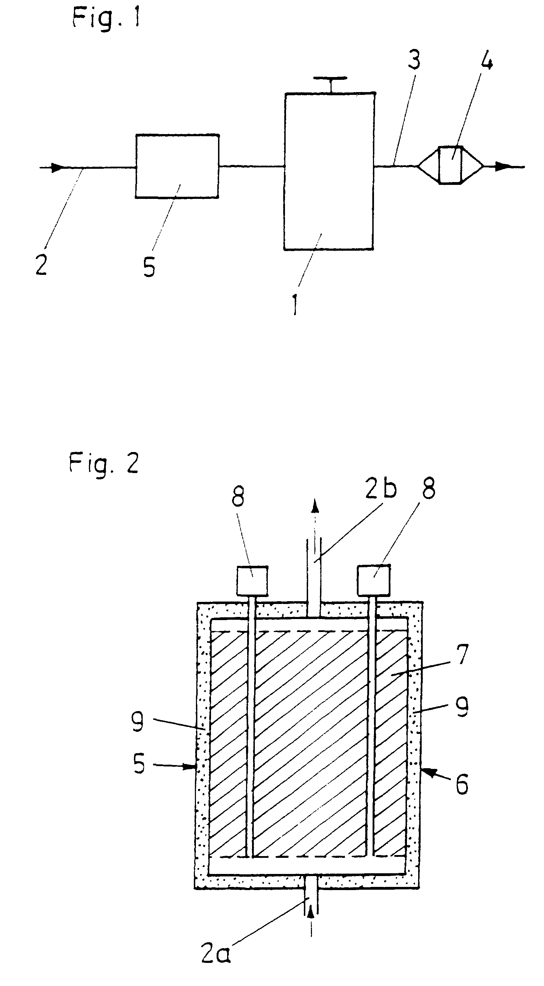

Bei dem in Fig. 1 dargestellten Ausführungsbeispiel ist mit 1 schematisch ein mit Gas betriebener Verbrennungsmotor (Gasmotor) bezeichnet, der über eine Treibgaszuleitung 2 mit Biogas (insbesondere Klärgas oder Deponiegas) versorgt wird. Beim Gasmotor kann es sich insbesondere um einen großen stationären Gasmotor handeln. Im Abgastrakt 3 des Gasmotors ist ein Abgaskatalysator 4 vorgesehen.

In der Treibgaszuleitung 2 zum Gasmotor 1 ist eine Reinigungseinrichtung 5 zum adsorptiven Reinigen des Treibgases angeordnet.

Die Reinigungseinrichtung 5 kann als Adsorptionsmittel vorteilhaft einen Aktivkohlefilter enthalten. Durch den Einsatz einer solchen Reinigungseinrichtung 5 lassen sich die Standzeiten für den Abgaskatalysator 4 wesentlich erhöhen, womit der Einsatz eines solchen Abgaskatalysators 4 bei mit Biogasen betriebenen Gasmotoren erstmals sinnvoll möglich ist. Über den Abgaskatalysator 4 läßt sich wiederum eine Verminderung der insgesamt abgegebenen Schadstoffe erzielen.

Bei der in Fig. 2 dargestellten Reinigungseinrichtung 5 ist in einem Gehäuse 6 ein Aktivkohlefilter 7 als Adsorptionsmittel untergebracht. Besonders eignet sich eine engporige wasserdampfaktivierte Aktivkohle auf Steinkohlebasis mit einer Rütteldichte von etwa 500kg/m³. Der Aktivkohlefilter 7 wird von dem zu reinigenden Treibgas durchströmt, wobei das verunreinigte Treibgas über den Zuleitungsanschluß 2a der Treibgaszuleitung einströmt und das gereinigte Treibgas die Reinigungseinrichtung 5 über den Zuleitungsanschluß 2b verläßt.

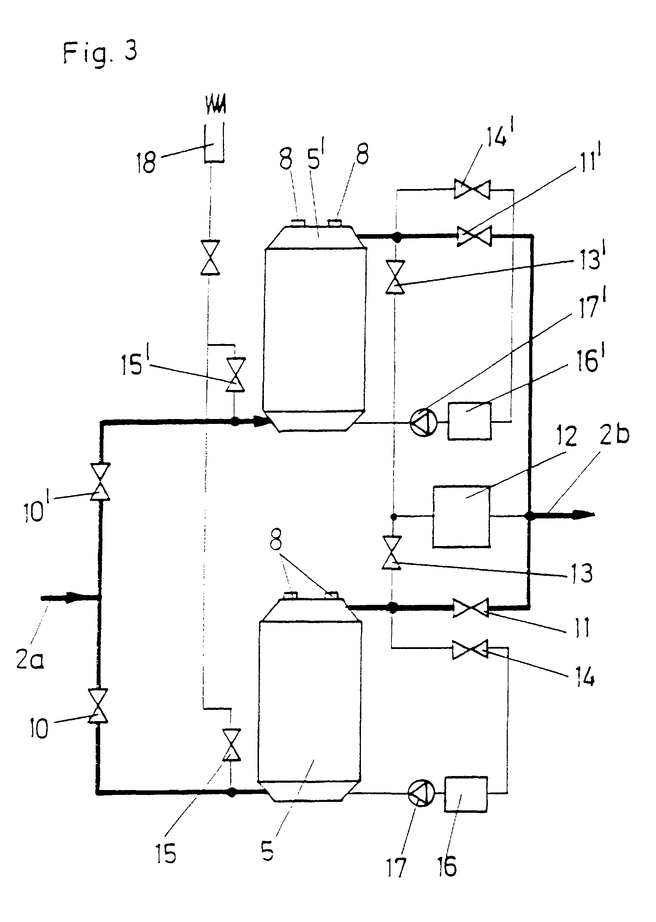

Um das Adsorptionsmittel von Zeit zu Zeit (beispielsweise alle Wochen) regenerieren zu können, ist erfindungsgemäß eine Regeniereinrichtung vorgesehen. Diese weist vorteilhaft eine Heizeinrichtung 8 zum Aufheizen des Adsorptionsmittels 7 (vorzugsweise Aktivkohle) auf. Bei dem in Fig. 2 dargestellten Ausführungsbeispiel weist die Heizeinrichtung 2 elektrische Heizelemente auf, die in die Aktivkohle 7 hineinreichen. Über diese Heizelemente ist es möglich, die Aktivkohle auf eine Temperatur zwischen 350 °C und 450 °C zu erhitzen. Gleichzeitig wird beim Regenerieren die Aktivkohle mit geringen Mengen eines brennbaren Spülgases, insbesondere eines gereinigten und vorgeheizten Treibgases, gespült. Die durch die Erwärmung aus der Aktivkohle ausgetriebenen (zuvor aus dem Biogas adsorbierten) Spurenstoffe (Biogasbegleitstoffe) werden dann zusammen mit dem Spülgas in einer Fackel verbrannt, wie dies beispielsweise in Fig. 3 gezeigt ist. Um Energieverluste durch Abstrahlung zu vermeiden, ist das Adsorptionsmittel 7 in einem Behälter 6 untergebracht, dessen Wände mit einer Wärmedämmung 9 (Fig. 2) versehen sind. Nach einer Ausheizzeit von beispielsweise mehreren Stunden, wird die Aktivkohle abgekühlt und die Spülung mittels eines Spülgases abgestellt. Das Adsorptionsmittel ist nun regeneriert, das heißt zur Aufnahme von unerwünschten Spurenstoffen aus dem Treibgas geeignet.

Um den Motorbetrieb während des Regenerierens des Adsorptionsmittels 7 nicht unterbrechen zu müssen, können gemäß einer bevorzugten Ausführungsform der Erfindung zwei parallele Reinigungseinrichtungen 5, 5' vorgesehen sein, wobei das zu reinigende Treibgas wahlweise über eine der Reinigungseinrichtungen führbar ist, während das Adsorptionsmittel 7 der anderen Reinigungseinrichtung regeneriert wird (Fig. 3). Bei dem in Fig. 3 dargestellten Ausführungsbeispiel sind also zwei vorzugsweise gleich aufgebaute Reinigungseinrichtungen 5 und 5' vorgesehen. Es kann sich dabei im Prinzip im wesentlichen um mit Aktivkohle gefüllte Behälter handeln, wie sie in Fig. 2 dargestellt sind. Im Betrieb ist beispielsweise die in Fig. 3 untere Reinigungseinrichtung 5 aktiv, während die obere Reinigungseinrichtung 5' entweder ruht oder regeneriert wird, wie dies im folgenden beschrieben ist: Die Magnetventile 10' und 11' sind demgemäß geschlossen, während die Magnetventile 10 und 11 geöffnet sind. Das Treibgas strömt nun über den Zuleitungsanschluß 2a und das geöffnete Magnetventil in die Reinigungseinrichtung 5. Dort wird das Treibgas gereinigt und strömt dann in gereinigtem Zustand über das geöffnete Magnetventil 11 und den Zuleitungsanschluß 2b zum nicht näher dargestellten Gasmotor. Wie bereits erwähnt, ist die Aufnahmefähigkeit des Adsorptionsmittels (Aktivkohle) in der Reinigungseinrichtung 5 begrenzt. Sobald (bzw. kurz bevor) die Sättigung eintritt, wird nun auf die in Fig. 3 obere Reinigungseinrichtung 5' umgeschaltet, die ein noch voll aufnahmefähiges Adsorptionsmittel aufweist. Um beim Umschalten Störungen zu vermeiden, können kurzzeitig auch beide Reinigungseinrichtungen 5 und 5' gleichzeitig aktiv sein.

Nach vollendetem Umschalten sind die Magnetventile 10' und 11' geöffnet, während die Magnetventile 10 und 11 geschlossen sind. Es kann nun das Adsorptionsmittel im Reinigungsbehälter 5 regeneriert werden. Dazu werden zunächst die Heizelemente 8 angeschaltet, worauf sich die Aktivkohle auf ca. 350 °C bis 450 °C erwärmt. Zusätzlich strömt gereinigtes und in der Heizeinrichtung 12 vorgeheiztes Treibgas über das geöffnete Magnetventil 13 in die Reinigungseinrichtung 5. Dabei sind neben den Magnetventilen 10 und 11 auch die Magnetventile 13', 14 und 14' sowie 15' geschlossen. Das somit als Spülgas verwendete, gereinigte und vorgeheizte Treibgas (Biogas) nimmt nun die aus dem Adsorptionsmittel ausgetriebenen Biogasbegleitstoffe (Spurenstoffe) mit und strömt über das geöffnete Magnetventil 15 zu einer Fackel 18, wo eine Verbrennung erfolgt. Diese Fackel 18 kann eine Dauerzündung aufweisen, um ankommendes Spülgas jedenfalls immer zu zünden.

Nach einer Ausheizzeit von mehreren Stunden wird das Adsorptionsmittel abgekühlt. Dazu werden zunächst die Heizelemente 8 ausgeschaltet und die Spülung mit Spülgas unterbrochen, indem das Magnetventil 13 geschlossen wird. Auch das Magnetventil 15 wird geschlossen. Dafür wird aber das Magnetventil 14 geöffnet und ein Kühlkreislauf geschlossen, der über den Kühler 16 und ein Zirkulationsgebläse 17 führt. Auf diese Weise kann das Adsorptionsmittel im Reinigungsbehälter 5 trotz der guten Wärmedämmung des Behälters rasch abgekühlt werden.

Die Regenerierung der Reinigungseinrichtung 5' kann später dann auf analoge Weise erfolgen, wobei die dort gezeigten Komponenten dieselben jedoch mit einem Strich versehenen Bezugsziffern trägt, wie die zur in Fig. 3 unteren Reinigungseinrichtung 5 gehörigen Komponenten.

## Patentansprüche

1. Motoranordnung mit einem Gasmotor (1), in dessen Abgastrakt vorzugsweise ein Abgaskatalysator angeordnet ist, wobei in der Treibgaszuleitung zum Gasmotor (1) mindestens eine Reinigungseinrichtung (5) zum adsorptiven Reinigen des Treibgases angeordnet ist, die eine Regeneriereinrichtung zum Regenerieren des Adsorptionsmittels umfaßt, wobei die Regeneriereinrichtung eine Einrichtung zum Führen eines brennbaren Spülgases durch die Reinigungseinrichtung umfaßt, **dadurch gekennzeichnet, daß** eine vom Gasmotor (1) gesonderte Einrichtung (18) zum anschließenden Verbrennen des Spülgases samt den von diesem aus dem Adsorptionsmittel (7) mitgenommenen Begleitstoffen vorgesehen ist.

2. Motoranordnung nach Anspruch 1, **dadurch gekennzeichnet, daß** das Spülgas gereinigtes und vorzugsweise vorgeheiztes Treibgas ist.

3. Motoranordnung nach Anspruch 1 oder 2, **dadurch gekennzeichnet, daß** die Einrichtung zum Verbrennen eine vorzugsweise dauergezündete Fackel (18) umfaßt.

4. Motoranordnung nach einem der Ansprüche 1 bis 3 **dadurch gekennzeichnet, daß** das Treibgas - wie an sich bekannt - ein Biogas insbesondere ein Klärgas oder ein Deponiegas ist.

5. Motoranordnung nach einem der Ansprüche 1 bis 4, **dadurch gekennzeichnet, daß** das Adsorptionsmittel (7) der Reinigungseinrichtung (5) zum Adsorbieren von organischen Siliziumverbindungen ausgebildet ist.

6. Motoranordnung nach einem der Ansprüche 1 bis 5, **dadurch gekennzeichnet, daß** die Reinigungseinrichtung (5) als Adsorptionsmittel (7) einen an sich bekannten Aktivkohlefilter enthält.

7. Motoranordnung nach Anspruch 6, **dadurch gekennzeichnet, daß** die Aktivkohle eine engporige, wasserdampfaktivierte Aktivkohle auf Steinkohlebasis ist.

8. Motoranordnung nach Anspruch 6 oder 7, **dadurch gekennzeichnet, daß** die Aktivkohle eine Rütteldichte zwischen 400kg/m³ und 600kg/m³, vorzugsweise von im wesentlichen 500kg/m³ aufweist.

9. Motoranordnung nach einem der Ansprüche 1 bis 8, **dadurch gekennzeichnet, daß** die Regeneriereinrichtung eine vom Gasmotor gesonderte Heizeinrichtung (8) zum Aufheizen des Adsorptionsmittels (7) umfaßt.

10. Motoranordnung nach Anspruch 9, **dadurch gekennzeichnet, daß** die Heizeinrichtung (8) mindestens ein elektrisches Heizelement aufweist.

11. Motoranordnung nach Anspruch 9 oder 10, **dadurch gekennzeichnet, daß** die Heizeinrichtung (8) das Adsorptionsmittel (7) auf eine Temperatur zwischen 350 °C und 450 °C erhitzt.

12. Motoranordnung nach einem der Ansprüche 1 bis 11, **dadurch gekennzeichnet, daß** das Adsorptionsmittel (7) in einem Behälter (6) untergebracht ist, dessen Wände mit einer Wärmedämmung versehen sind.

13. Motoranordnung nach einem der Ansprüche 1 bis 12, **dadurch gekennzeichnet, daß** zur Kühlung des Adsorptionsmittels (7) ein außerhalb desselben angeordneter Kühler (16) vorgesehen ist, wobei mittels eines Zirkulationsgebläses (17) ein durch das Adsorptionsmittel (7) sowie durch den Kühler (16) führender Gasstrom im geschlossenen Kreislauf führbar ist.

14. Motoranordnung nach einem der Ansprüche 1 bis 13 **gekennzeichnet durch** zwei parallele Reinigungseinrichtungen (5, 5'), wobei das zu reinigende Treibgas wahlweise über eine der Reinigungseinrichtungen führbar ist, während das Adsorptionsmittel (7) der anderen Reinigungseinrichtung regenerierbar ist.

## Claims

1. An engine arrangement having a gas engine (1), in the exhaust gas tract of which there is preferably arranged an exhaust gas catalytic converter, wherein arranged in the propellent gas feed line to the gas engine (1) is at least one cleaning device (5) for the adsorptive cleaning of the propellent gas, which includes a regeneration device for regeneration of the adsorption agent, wherein the regeneration device includes a device for passing a combustible flushing gas through the cleaning device **characterised in that** a device (18), separate from the gas engine (1), for subsequent combustion of the flushing gas together with the accompanying substances entrained thereby out of the adsorption agent (7) is provided.

2. An engine arrangement according to claim 1 **characterised in that** the flushing gas is cleaned and preferably preheated propellent gas.

3. An engine arrangement according to claim 1 or 2 **characterised in that** the combustion device includes a torch flare (18) preferably with permanent ignition.

4. An engine arrangement according to one of claims 1 to 3 **characterised in that** the propellent gas - as is known per se - is a biogas, in particular a sewer gas or a disposal site gas.

5. An engine arrangement according to one of claims 1 to 4 **characterised in that** the adsorption agent (7) of the cleaning device (5) is adapted to adsorb organic silicon compounds.

6. An engine arrangement according to one of claims 1 to 5 **characterised in that** the cleaning device (5) contains a per se known activated carbon filter as adsorption agent (7).

7. An engine arrangement according to claim 6 **characterised in that** the activated carbon is a narrow-pore, water vapour-activated carbon on a pit coal basis.

8. An engine arrangement according to claim 6 or 7 **characterised in that** the activated carbon has a shaking density of between 400 kg/ m³ and 600 kg/ m³, preferably substantially 500 kg/ m³.

9. An engine arrangement according to one of claims 1 to 8 **characterised in that** the regeneration device includes a heating device (8) separate form the gas engine, for heating the adsorption agent (7).

10. An engine arrangement according to claim 9 **characterised in that** the heating device (8) has at least one electrical heating element.

11. An engine arrangement according to claim 9 or claim 10 **characterised in that** the heating device (8) heats the adsorption agent (7) to a temperature of between 350° C und 450° C.

12. An engine arrangement according to one of claims 1 to 11 **characterised in that** the adsorption agent (7) is disposed in a container (6) whose walls are provided with a heat insulation.

13. An engine arrangement according to one of claims 1 to 12 **characterised in that** a radiator (16) arranged outside the adsorption agent (7) is provided for cooling the adsorption agent (7), wherein a gas flow which passes through the adsorption agent (7) and through the radiator (16) can be passed in a closed circuit by means of a circulation fan (17).

14. An enginge arrangement according to one of claims 1 to 13 **characterised by** two parallel cleaning devices (5, 5'), wherein the propellent gas to be cleaned can be passed selectively by way of one of the cleaning devices while the adsorption agent (7) of the other cleaning device can be regenerated.

## Revendications

1. Agencement de moteur avec un moteur à gaz (1), dans la branche d'échappement duquel est disposé de préférence un pot catalytique, au mcins un système d'épuration (5) pour le nettoyage par adsorption du gaz d'entraînement étant disposé dans la conduite d'admission du gaz d'entraînement du moteur à gaz (1), qui comprend un système de régénération pour la régénération de l'adsorbant, le système de régénération comprenant un dispositif pour le guidage d'un gaz de balayage combustible dans le système d'épuration, **caractérisé en ce qu'**il est prévu un dispositif (18) séparé du moteur à gaz (1) pour la combustion consécutive du gaz de balayage avec les substances associées emportées hors de l'adsorbant (7) par ce gaz.

2. Agencement de moteur selon la revendication 1, **caractérisé en ce que** le gaz de balayage est un gaz d'entraînement épuré et de préférence préchauffé.

3. Agencement de moteur selon la revendication 1 ou 2, **caractérisé en ce que** le dispositif pour la combustion comprend une torche (18) de préférence allumée en permanence.

4. Agencement de moteur selon l'une quelconque des revendications 1 à 3, **caractérisé en ce que** le gaz d'entraînement (connu en soi) est un biogaz, en particulier un gaz de curage ou un gaz de décharge.

5. Agencement de moteur selon l'une quelconque des revendications 1 à 4, **caractérisé en ce que** l'adsorbant (7) du système d'épuration (5) est conçu pour adsorber des composés de silicium organiques.

6. Agencement de moteur selon l'une quelconque des revendications 1 à 5, **caractérisé en ce que** le système d'épuration (5) contient comme adsorbant (7) un filtre à charbon actif connu en soi.

7. Agencement de moteur selon la revendication 6, **caractérisé en ce que** le charbon actif est un charbon actif activé par vapeur d'eau et à pores étroits à base de houille.

8. Agencement de moteur selon la revendication 6 ou 7, **caractérisé en ce que** le charbon actif présente une masse volumique apparente après tassement comprise entre 400 kg/m³ et 600 kg/m³, de préférence de sensiblement 500 kg/m³.

9. Agencement de moteur selon l'une quelconque des revendications 1 à 8, **caractérisé en ce que** le système de régénération comprend un système de chauffage (8) séparé du moteur à gaz pour le réchauffement de l'adsorbant (7).

10. Agencement de moteur selon la revendication 9, **caractérisé en ce que** le système de chauffage (8) présente au moins un élément de chauffage électrique.

11. Agencement de moteur selon la revendication 9 ou 10, **caractérisé en ce que** le système de chauffage (8) réchauffe l'adsorbant (7) jusqu'à une température comprise entre 350°C et 450°C.

12. Agencement de moteur selon l'une quelconque des revendications 1 à 11, **caractérisé en ce que** l'adsorbant (7) est logé dans un récipient (6), dont les parois sont pourvues d'une isolation thermique.

13. Agencement de moteur selon l'une quelconque des revendications 1 à 12, **caractérisé en ce que**, pour le refroidissement de l'adsorbant (7), il est prévu un refroidisseur (16) disposé à l'extérieur de l'adsorbant, moyennant quoi un flux de gaz circulant dans l'adsorbant (7) et le refroidisseur (16) peut être guidé en circuit fermé au moyen d'une soufflerie de circulation (17).

14. Agencement de moteur selon l'une quelconque des revendications 1 à 13, **caractérisé par** deux systèmes d'épuration (5, 5') parallèles, le gaz d'entraînement à épurer pouvant être guidé au choix par l'un des systèmes d'épuration, tandis que l'adsorbant (7) de l'autre système d'épuration peut être régénéré.
